# EUROPÄISCHE PATENTSCHRIFT

(11) **EP 1 115 615 B1**
(45) Veröffentlichungstag und Bekanntmachung des Hinweises auf die Patenterteilung: **25.06.2003**
(21) Anmeldenummer: 99955681.4
(22) Anmeldetag: 14.09.1999
(51) Int. Cl.: B64G 1/64, F16B 1/00, E05B 47/00

(54) **HALTE- UND AUSLÖSEMECHANISMUS MIT EINEM FORMGEDÄCHTNIS-AKTUATOR**
HOLDING AND RELEASING MECHANISM WITH A SHAPE MEMORY ACTUATOR
MECANISME DE RETENUE ET DE LIBERATION COMPORTANT UN ACTIONNEUR A MEMOIRE DE FORME

(30) Priorität: 24.09.1998 DE 19843965
(43) Veröffentlichungstag der Anmeldung: 18.07.2001
(73) Patentinhaber: EADS Deutschland GmbH, 85521 Ottobrunn (DE)
(72) Erfinder: ROTH, Martin, D-82024 Taufkirchen (DE); SCHUSTER, Andreas, D-36304 Alsfeld (DE); VOGGENREITER, Heinz, D-81545 München (DE); VORBRUGG, Harald, D-80803 München (DE); REINDL, Markus, D-85757 Karlsfeld (DE)
(86) Internationale Anmeldenummer: DE9902901
(87) Internationale Veröffentlichungsnummer: WO00017051

(56) Entgegenhaltungen:
- DE-A- 19 649 739
- US-A- 4 753 465
- US-A- 5 060 888
- US-A- 5 129 753
- US-A- 5 718 531
- US-A- 5 722 709

## Beschreibung

Die Erfindung betrifft einen Halte- und Auslösemechanismus mit einem Formgedächtnis-Aktuator gemäß dem Oberbegriff des Patentanspruchs 1.

Es ist in der Raumfahrttechnik bekannt ( DE-A1-196 49 739), einen unter Zugspannung stehenden Draht an seinem gekrümmten Ende mit einem Schmelzdraht zu halten, der bei Stromdurchfluß schmilzt und den Draht freigibt. Der unter Zugspannung stehende Draht hält, als Spule geformt, zwei Hälften einer geteilten Bolzenhalterung zusammen. Bei einer Freigabe des Drahtes klappen die beiden Hälften der Bolzenhalterung unter Federdruck auseinander und der Bolzen kann sich aus der Bolzenhalterung lösen. Mit dem Bolzen werden beispielsweise beim Starten der Rakete Solarzellenpanels eines Raumflugkörpers zusammengedrückt, die bei Erreichen des Missionszieles durch das Lösen des Bolzens freigegeben werden. Die Verwendung eines Schmelzdrahtes hat den Nachteil einer unsicheren und undefinierten Auslösung.

US 5,129,753 offenbart einen Halte- und Auslösemechanismus mit einem Formgedächtnis-Aktuator. Hierbei wird ein Formgedächtnisdraht verwendet, der im Auslösefall unter Temperaturerhöhung seine Länge verkürzt und dabei eine Sicherungshülse aus einer Ruheposition hebt. Dabei gibt die Sicherungshülse ein mehrteiliges Spannfutter frei, welches auseinanderklappt und einen Zapfen freigibt, womit die Verbindung gelöst wird.

Aus der US-5,160,233 ist eine Bolzenhalterung mit einem Formgedächtnis-Aktuator für den Einsatz in der Raumfahrttechnik bekannt, der zum Abstoßen von leeren Treibstofftanks dient, die mit einem Bolzen außen an einem Raumfahrzeug gehalten sind. Die bekannte Bolzenhalterung gibt den Bolzen frei, indem Zylindersegmente in der Bolzenhalterung, die ein auf dem Bolzen vorhandenes Gewinde mit ihrem Innengewinde von außen umfassen und dadurch den Bolzen halten, temperaturgesteuert auseinandergedrückt werden. Das Auseinanderdrücken erfolgt derart, daß die Zylindersegmente zusammen mit dem Bolzen mit einem zylindrisch ausgebildeten Formgedächtnis-Aktuator in eine Position gehoben werden, die in der Bolzenhalterung ein seitliches Auseinanderweichen der Zylindersegmente zuläßt und daß das Auseinanderweichen der Zylindersegmente durch das Eindringen des an seiner Stirnseite als Kegelstumpf ausgebildeten Aktuators in eine von den Zylindersegmenten gebildete Ringöffnung erfolgt. Der Formgedächtnis-Aktuator dehnt sich bei Temperaturzufuhr in seiner Längsrichtung aus und bewirkt dadurch das vorangehend beschriebene Anheben und Auseinanderdrücken der Zylindersegmente. Die Temperaturzufuhr im Auslösefall erfolgt mittels joulscher Wärme. Zum Auseinanderdrücken der Zylindersegmente ist ein relativ großer und kräftiger Aktuator erforderlich und beim Aufeinandergleiten der Teile in der Bolzenhalterung können Probleme bezüglich einer Kaltverschweißung auftreten. Die Ausbildung der Zylindersegmente, deren Fixierung im Haltezustand und die Mittel zum Auseinanderweichen im Auslösezustand erfordern eine relativ aufwendige konstruktive Gestaltung.

US 5,718,531 und US 4,753,465 offenbaren Halte- und Auslösemechanismen, in denen Haltebolzen aus einer Formgedächtnislegierung direkt den zu fixierenden Körper halten und sich bei Erwärmung zusammenziehen, um den Körper freizugeben. Da größere Kräfte aufzufangen sind, müssen die Haltebolzen an die Anforderungen angepaßt und dementsprechend groß dimensioniert werden. Nachteilig wirkt sich somit aus, daß beim Freigeben des Körpers große Massen an Gedächtnislegierung zur Kontraktion erwärmt werden müssen, was einer enormen Energiemenge entspricht

Der Erfindung liegt die Aufgabe zugrunde, einen Halte- und Auslösemechanismus mit einem Formgedächtnis-Aktuator zu schaffen, die ein sicheres, Auslösen bei einfacher konstruktiver Gestaltung und geringer Energiezufuhr ermöglicht.

Diese Aufgabe wird erfindungsgemäß durch die Merkmale des Patentanspruchs 1 gelöst. Weiterbildungen der Erfindung sind in den Unteransprüchen angegeben.

Die Erfindung verwendet die Eigenschaften von Legierungen mit Formgedächtnis, sog. Shape Memory Alloys. Derartige Legierungen, z.B. auf der Basis von TiNi, weisen bekannterweise zwei verschiedene feste Phasen auf, nämlich martensitisch bei niedriger Temperatur und austenitisch bei hoher Temperatur mit einem progressivem Phasendurchtritt während man die Legierung erwärmt. Erfindungsgemäß wird der sog. "Ein-Weg-Effekt" derartiger Legierungen ausgenutzt. Dabei wird im Martensit eine "pseudoplastische" Verformung der Legierung erzeugt, die sich im durch Temperaturerhöhung eingestellten Austenit bekannterweise wieder zurückbildet. Einer daran anschließende Abkühlung ins Martensit führt aber nicht zu einer weiteren Verformung, sondern es bleibt der im Austenit zurückgebildete Zustand erhalten.

Der erfindungsgemäße Halte- und Auslösemechanismus hat den Vorteil, daß er aus wenigen Teilen besteht, wegen der kompakten Bauweise leicht in bestehende Designs integrierbar ist und damit bekannte Aufbauten simplifiziert. Ein weiterer Vorteil des erfindungsgemäßen Halters besteht darin, daß bei der Drahtfreigabe keine weggesprengten Teile, wie z.B. bei einer pyrotechnischen Freigabe, entstehen und daß keine Teile bei der Freigabe zerstört werden. Durch Verwendung Formgedächtnislegierungen, die mit einem speziellen mechanischen Bearbeitungsschritt vorbehandelt sind, liegt die Austenit-Start-Temperatur deutlich über den Werten von kommerziell erhältlichen TiNi-Legierungen. Bei einer Verwendung derartiger Legierungen können erfindungsgemäße Drahthalter vorteilhaft auch bei höheren Umgebungstemperaturen eingesetzt werden, wie sie z.B. bei Raumfahrtmissionen auftreten können.

Anhand der Zeichnung werden Ausführungsbeispiele der Erfindung näher erläutert.
- Fig. 1: zeigt eine Bolzenhalterung mit Aktuatoraufnahme in geschnittener Vorderansicht,
- Fig.2: zeigt die Bolzenhalterung im ausgelösten Zustand unter Weglassung der Darstellung der Aktuatoraufnahme und
- Fig.3: zeigt eine Draufsicht der Bolzenhalterung bei abgenommenen Oberteil der Aktuatoraufnahme.

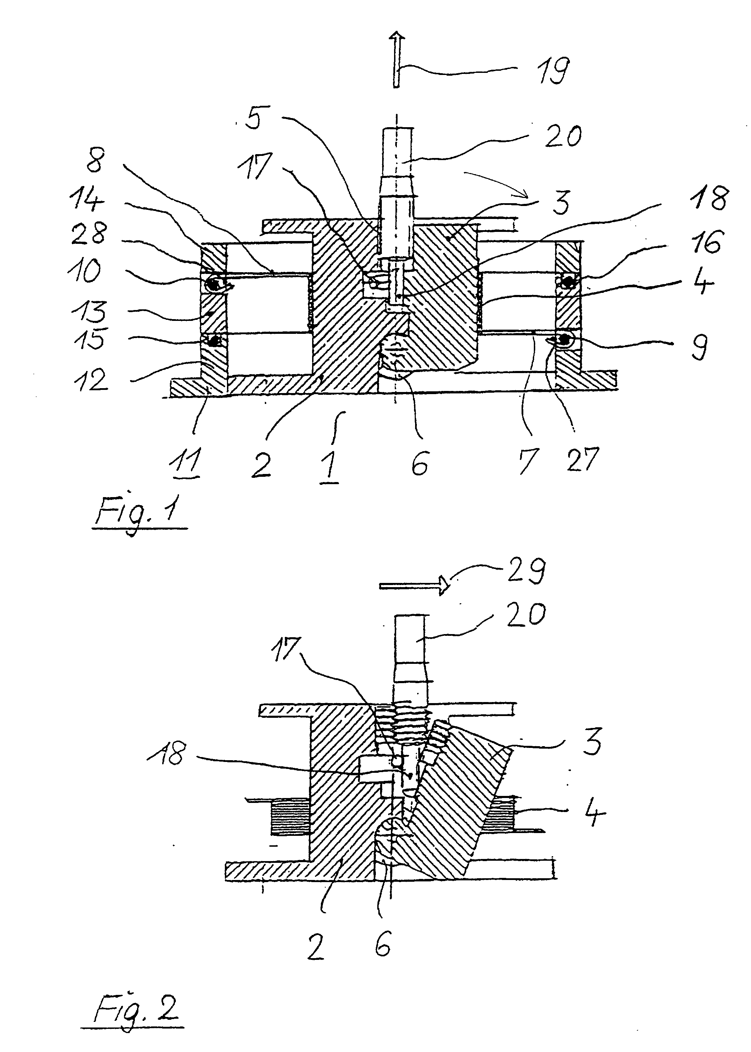

Das in Fig. 1 gezeigte Ausführungsbeispiel für einen Halte- und Auslösemechanismus 1 für einen Bolzen 20 besteht aus zwei Zylindersegmenten 2 und 3 als Halterung, einer mechanischen Feder 6 , einem Mitnehmer 7, einer Drahtwicklung 4 mit den beiden Drahtenden 7 und 8, die mit hakenförmige Öffnungen 27 und 28 enden, einer Aktuatoraufnahme 11, die sich aus einem Unterteil 12, einem Mittelteil 13 und einem Oberteil 14 zusammensetzt. In der Aktuatoraufnahme 11 sind in abgedeckten Ringnuten 15 und 16 jeweils ein Formgedächtnisdraht 9 und 10 gelagert. Die ringförmigen Formgedächtnisdrähte 9 und 10 sind unterbrochen und ragen mit einem ihrer Enden durch die Öffnungen 27 und 28 und halten so die durch die Feder 6 unter Zugspannung stehende Drahtwicklung 4 zusammen. Der zu haltende Bolzen 20 ragt mit seinem Bolzengewinde 5 und seinem Bolzenfortsatz 18 in eine Gewindebohrung der von der Drahtwicklung 4 zusammengehaltenen Zylindersegmente 2 und 3.

Der Auslösezutsand der voranstehend beschriebenen Bolzenhalterung 1 ist in Fig.2 gezeigt. Durch eine gesteuerte Temperaturzufuhr kontraktieren die beiden, in Fig.2 vereinfachend nicht dargestellten, Formgedächtnisdrähte 9 und 10 in ihrer Längsachse und ziehen sich aus den Öffnungen 27 und 28 zurück. Dadurch öffnet sich die Drahtwicklung 4 und das Zylindersegment 3 klappt unter Wirkung der vorgespannten mechanischen Feder 6 seitlich weg. Das wegklappende Zylindersegment 3 gibt eine Längshälfte des Bolzengewindes 5 frei. Der an dem Zylindersegment 3 befestigte Mitnehmer 17 wirkt dabei auf den Bolzenfortsatz 18 derart, daß er entsprechend dem Richtungspfeil 29 seitlich mitgenommen wird und dadurch auch mit der zweiten Längshälfte seines Bolzengewindes 5 aus der Bolzenhalterung 1 freikommt.

Mit dem Bolzen 20 sind beipielsweise Solarpanel eines Raumfahrzeuges während des Raketenstarts zusammengehalten, wobei der Bolzen durch die zusammengedrückten Solarpanel unter - in seiner Längsachse wirkender - Vorspannung steht. Bei der temperaturgesteuerten Auslösung wird nach Abschluß der vorangehend beschriebenen Auslösevorgänge der Bolzen infolge dieser Vorspannung gemäß dem Richtungspfeil 19 (siehe Fig. 1) aus der Bolzenhalterung 1 entfernt und gibt die Solarpanel zur Entfaltung frei.

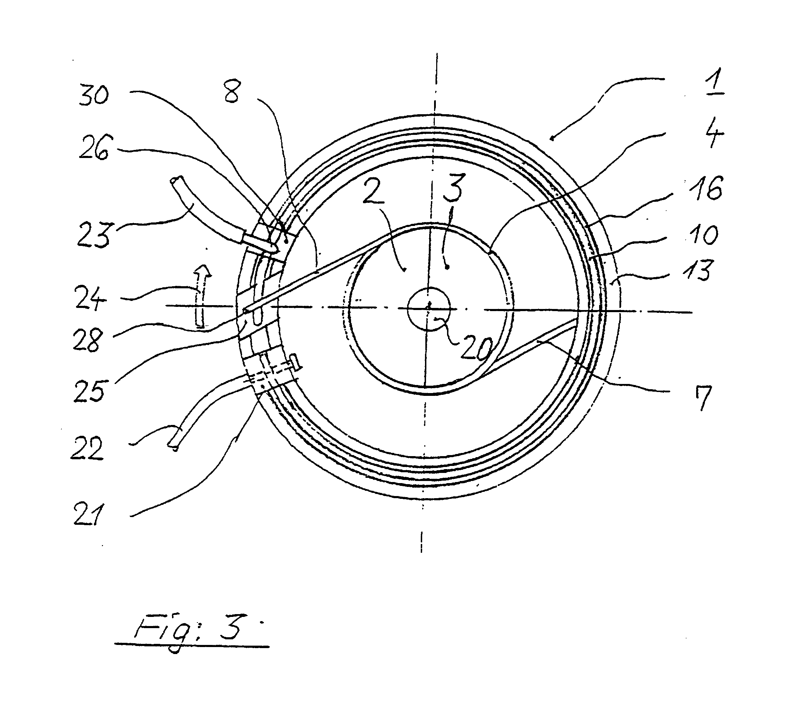

In Fig.3 ist die vorangehend beschriebene Bolzenhalterung bei abgenommenen - und in Fig.3 nicht gezeigtem - Oberteil 14 der. Aktuatoraufnahme 11 in Draufsicht gezeigt. Die Drahtenden 8 und 9 der Drahtwicklung 4 sind tangential von der Drahtwicklung 4 zu der Aktuatoraufnahme 11 geführt.

In dem sichtbaren Mittelteil 13 ist die Ringnut 16 eingearbeitet, in welcher der Formgedächtnisdraht 10 gelagert ist. Im zusammengesetzten Zustand der Aktuatoraufnahme - bei aufgesetztem Oberteil 14 - ist die Ringnut 16 von dem Oberteil 14 abgedeckt. Der ringförmige Formgedächtnisdraht 10 ist an einer Stelle unterbrochen und dort mit einem seiner Enden mit einer Drahthalterung 21 in der Ringnut 16 festgehalten. Die Drahthalterung 21 bildet außerdem einen elektrischen Kontakt zwischen dem Formgedächtnisdraht 10 und einem Stromleiter 22. Das andere Ende des Formgedächtnisdrahtes 10 ist in der Ringnut 16 nicht festgelegt, sondern ragt in einen Spalt 25, der die Ringnut 16 unter einem bestimmten Winkel unterbricht. Der Winkel ergibt sich aus der tangentialen Anordnung des Drahtendes 8.

In dem Spalt 25 ragt das Ende des Formgedächtnisdrahtes 10 im nicht erwärmten Zustand des Martensit durch die hakenförmige Öffnung 28 des unter Zugspannung stehenden Drahtendes 8 hindurch. Bei Erwärmung in den Austenit-Zustand zieht sich das Ende des Formgedächtnisdrahtes 10 aus der Öffnung 28 heraus und gibt das Drahtende 8 frei.

Die Erwärmung des Formgedächtnisdrahtes 10 erfolgt mittels joulscher Wärme. Dazu ist ein zweiter Stromanschluß 26 an dem frei beweglichen Ende des Formgedächtnisdrahtes 10 vorgesehen, wobei das abisolierte Ende eines Stromleiters 23 in einem quer zur Ringnut angeordneten Spalt 30, der eine für die Kontraktionsbewegung des Formgedächtnisdrahtes 10 hinreichender Breite aufweist, mit dem Formgedächtnisdraht 10 mechanisch verbunden ist.

Unterschiedliche Legierungen mit Formgedächtnis sind einsetzbar; z.B. normale TiNi-Drähte ohne spezielle mechanische Vorbehandlung mit Werten für die Austenit-Start-Temperatur im Bereich zwischen 60 und 80 grad C. Der Formgedächtnisdraht 10 des Ausführungsbeispieles ist ein TiNi-Draht und ist mit einem speziellen Walzprozeß so vorbehandelt, daß der Wert für die Austenit-Start-Temperatur des Drahtes größer als 100 grad C ist.

Das andere Drahtende 7 der Drahtwicklung 4 ist im Ausführungsbeispiel entsprechend den voranstehend beschriebenen Ausführungen zum Drahtende 8 mit dem Formgedächtnisdraht 9 gehalten, der in dem Unterteil 12 in der Ringnut 15 gelagert ist. Es könnte aber auch eines der Drahtenden 7 oder 8 starr in der Bolzenhalterung befestigt sein. Durch die lösbare Halterung beider Drahtenden wird eine vorteilhafte Redundanz für die Auslösung des Bolzens 20 erreicht.

Die Aktuatoraufnahme 11 ist aus dem hochtemperaturbeständigen Kunststoff Polyetheretherketon (PEEK) gefertigt. Dieser Werkstoff ist als Raumfahrtwerkstoff qualifiziert und die elektrischen Kennwerte bzgl. der Isolation sind im Vergleich zu anderen Kunsttsoffen sehr gut. Eine Verwendung anderer temperaturbeständiger und elektrisch isolierender Materialien ist möglich.

## Patentansprüche

1. Halte- und Auslösemechanismus mit einer einen Körper fixierenden Halterung, **dadurch gekennzeichnet, dass** ein temperaturgesteuerter, unter Zugspannung stehendes Drahtende freigebender Formgedächtnis-Aktuator vorgesehen ist und das Drahtende (7,8) von einem losen Ende eines bei Temperaturzufuhr in Längsachse kontrahierenden Formgedäohtnisdrahtes (9,10) gehalten Ist, wobei dieser bei Temperaturerhöhung sein loses Ende aus einer vom Drahtende (7,8) gebildeten Öffnung (27,28) zieht und der Draht die Halterung freigibt.

2. Halte- und Auslösemechanismus nach Anspruch 1, **dadurch gekennzeichnet, dass** der Formgedächtnisdraht (9,10) ringförmig mit einer Unterbrechung ausgebildet ist.

3. Halte- und Auslösemechanismus nach Anspruch 2, **dadurch gekennzeichnet, dass** der Formgedächtnisdraht (9,10) in einer abgedeckten Ringnut (15,16) aufgenommen ist und dass in der Ringnut (15, 16) im Bereich des losen Endes des Formgedächtnisdrahtes (9, 10) ein Spalt (25) zum Einführen der Öffnung (27,28) vorgesehen ist

4. Halte- und Auslösemechanismus nach einem der Ansprüche 1 bis 3, **dadurch gekennzeichnet, dass** der Formgedächtnisdraht (9,10) durch Ausnutzung des "Ein-Weg-Effektes" des Formgedächtnismateriales bei Temperaturerhöhung irreversibel kontrahiert.

5. Halte- und Auslösemechanismus nach einem der Ansprüche 1 bis 4, **dadurch gekennzeichnet, dass** das Formgedächtnlsmaterial auf einer TiNi-Legierung basiert.

6. Halte- und Auslösemechanismus nach Anspruch 5, **dadurch gekennzeichnet, dass** das Formgedächtnismaterial ein speziell mit einem mechanischen Verfahren vorbehandelter Draht ist, der aufgrund dieser Vorbehandlung eine Austenit-Start-Temperatur von größer als 100°C aufweist.

7. Hälte- und Auslösemechanismus nach einem der Ansprüche 1 bis 6, **dadurch gekennzeichnet, dass** der Formgedächtnisdraht (9, 10) in einer Aktuatoraumahme (11) aufgenommen ist, die aus dem temperaturbeständigen Kunststoff Polyetheretherketon (PEEK) gefertigt ist

8. Halte- und Auslösemechanismus nach einem der Ansprüche 1 bis 7, **dadurch gekennzeichnet, dass** die Erwärmung des Formgedäohtnisdrahtes (9,10) auf die Austenit-Start-Ternperatur mittels Joulscher Wärme erfolgt

9. Halte- und Auslösmechanismus nach einem der Ansprüche 1 bis 8, **dadurch gekennzeichnet, dass** der Halte- und Auslösemechanismus In einer Bolzenhalterung mit einer Drahtwicklung (4) eingesetzt ist, dass die Drahtwicklung (4) Zylindersegmente (2,3) gegen den Druck einer mechanischen Feder (6) zusammenhält, dass in einer Gewindebohrung der zusammengehaltenen Zylindersegmente (2,3) ein unter Zugspannung stehender Bolzen (20) mit seinem Bolzengewinde (5) aufgenommen ist, dass der Halte- und Auslösemechanismus das/die Drahtende(n) (7,8) der Drahtwicklung (4) hält und bei Freigabe der Drahtenden (7,8) durch den Halte- und Auslösemechanismus die Zylindersegmente (2,3) auseinanderklappen und den Bolzen (20) freigeben.

## Claims

1. Holding and releasing mechanism having a mounting for fixing a body,
**characterised in that** a temperature-controlled shape-memory actuator that releases a wire end subjected to tensile stress is provided, and **in that** the wire end (7, 8) is held by a loose end of a shape-memory wire (9, 10) contracting in the direction of its longitudinal axis when heat is applied, wherein upon an increase in temperature the shape-memory wire withdraws its loose end from an aperture (27, 28) formed by the wire end (7, 8) such that the wire releases the mounting.

2. Holding and releasing mechanism according to claim 1, **characterised in that** the shape-memory wire (9, 10) is of annular shape with an interruption.

3. Holding and releasing mechanism according to claim 2, **characterised in that** the shape-memory wire (9, 10) is received in a covered annular groove (15,16), and **in that** in the annular groove (15, 16) in the region of the loose end of the shape-memory wire (9, 10) there is provided a gap (25) for introducing the aperture (27, 28).

4. Holding and releasing mechanism according to any one of claims 1 to 3,
**characterised in that** upon an increase in temperature the shape-memory wire (9, 10) contracts irreversibly through exploitation of the "one-way effect" of the shape-memory material.

5. Holding and releasing mechanism according to any one of claims 1 to 4,
**characterised in that** the shape-memory material has a TiNi alloy as a base.

6. Holding and releasing mechanism according to claim 5, **characterised in that** the shape-memory material is a wire specially pre-treated with a mechanical process which has an austenite start temperature of more than 100°C as a consequence of this pre-treatment.

7. Holding and releasing mechanism according to any one of claims 1 to 6,
**characterised in that** the shape-memory wire (9, 10) is received in an actuator retainer (11) that is made from the temperature-resistant plastics material polyetherether ketone (PEEK).

8. Holding and releasing mechanism according to any one of claims 1 to 7,
**characterised in that** heating of the shape-memory wire (9,10) to the austenite start temperature is brought about by the Joule effect.

9. Holding and releasing mechanism according to any one of claims 1 to 8,
**characterised in that** the holding and releasing mechanism is used in a bolt mounting with a wire coil (4), **in that** the wire coil (4) holds cylinder segments (2, 3) together against the pressure of a mechanical spring (6), **in that** a threaded bore of the held-together cylinder segments (2, 3) receives, by engaging with the bolt thread (5) thereof, a bolt (20) subjected to tensile stress, **in that** the holding and releasing mechanism holds the wire end(s) (7, 8) of the wire coil (4) and, upon release of the wire ends (7, 8) by the holding and releasing mechanism, the cylinder segments (2, 3) fold away from one another and release the bolt (20).

## Revendications

1. Mécanisme de retenue et de libération comportant une retenue fixant un corps, **caractérisé en ce qu'**il est prévu un actionneur à mémoire de forme commandé par température, qui libère une extrémité d'un fil métallique soumise à une contrainte de traction, et **en ce que** l'extrémité (7, 8) du fil métallique est retenue par une extrémité libre d'un fil métallique à mémoire de forme (9, 10) qui se rétracte dans son axe longitudinal par un apport de température, celui-ci retirant lors de l'augmentation de la température son extrémité libre d'un orifice (27, 28) formé par l'extrémité (7, 8) du fil métallique, et le fil métallique libérant la retenue.

2. Mécanisme de retenue et de libération selon la revendication 1, **caractérisé en ce que** le fil métallique à mémoire de forme (9, 10) est agencé de façon annulaire avec une interruption.

3. Mécanisme de retenue et de libération selon la revendication 2, **caractérisé en ce que** le fil métallique à mémoire de forme (9, 10) est logé dans une rainure annulaire recouverte (15, 16), et **en ce qu'**une fente (25), destinée à l'insertion de l'orifice (27, 28), est prévue dans la rainure annulaire (15, 16) dans la zone de l'extrémité libre du fil métallique à mémoire de forme (9, 10).

4. Mécanisme de retenue et de libération selon l'une quelconque des revendications 1 à 3, **caractérisé en ce que**, par l'utilisation de "l'effet à sens unique" du matériau à mémoire de forme, le fil métallique à mémoire de forme (9, 10) se rétracte de façon irréversible lors de l'augmentation de la température.

5. Mécanisme de retenue et de libération selon l'une quelconque des revendications 1 à 4, **caractérisé en ce que** le matériau à mémoire de forme est basé sur un alliage de TiNi.

6. Mécanisme de retenue et de libération selon la revendication 5, **caractérisé en ce que** le matériau à mémoire de forme est un fil métallique ayant subi un traitement préalable spécifique avec un procédé mécanique, lequel possède en raison de ce traitement préalable une température de transition austénitique supérieure à 100 °C.

7. Mécanisme de retenue et de libération selon l'une quelconque des revendications 1 à 6, **caractérisé en ce que** le fil métallique à mémoire de forme (9, 10) est logé dans une réception (11) d'actionneur, qui est constituée de la matière plastique cétone de polyéther (PEEK) à haute résistance thermique.

8. Mécanisme de retenue et de libération selon l'une quelconque des revendications 1 à 7, **caractérisé en ce que** le fil métallique à mémoire de forme (9, 10) est porté à la température de transition austénitique au moyen de chaleur par effet Joule.

9. Mécanisme de retenue et de libération selon l'une quelconque des revendications 1 à 8, **caractérisé en ce que** le mécanisme de retenue et de libération est inséré dans une retenue de boulon comportant une bobine (4) de fil métallique, **en ce que** la bobine (4) de fil métallique maintient ensemble des segments cylindriques (2, 3) en s'opposant à la pression d'un ressort mécanique (6), **en ce qu'**un boulon (20) soumis à une contrainte de traction est logé avec son filetage (5) de boulon dans un taraudage des segments cylindriques (2, 3) maintenus ensemble, **en ce que** le mécanisme de retenue et de libération retient l'extrémité / les extrémités (7, 8) du fil métallique de la bobine (4) de fil métallique, et **en ce que**, lors de la libération des extrémités (7, 8) du fil métallique par le mécanisme de retenue et de libération, les segments cylindriques (2, 3) s'écartent l'un de l'autre et libèrent le boulon (20).
